# FASCICULE DE BREVET EUROPEEN

(11) **EP 3 464 473 B1**
(45) Date de publication et mention de la délivrance du brevet: **19.07.2023**
(21) Numéro de dépôt: 17729530.0
(22) Date de dépôt: 22.05.2017
(51) Int. Cl.: C08L 95/00

(54) **BITUME SOLIDE A TEMPERATURE AMBIANTE**
BEI RAUMTEMPERATUR FESTES BITUMEN
BITUMEN SOLID AT AMBIENT TEMPERATURE

(30) Priorité: 23.05.2016 FR 1654581
(43) Date de publication de la demande: 10.04.2019
(73) Titulaire: TotalEnergies OneTech, 92400 Courbevoie (FR); Centre National de la Recherche Scientifique, 75016 Paris (FR)
(72) Inventeur: MOUAZEN, Mouhamad, 92000 Nanterre (FR); MERCE, Manuel, 69007 Lyon (FR); SCHMITT, Véronique, 33400 Talence (FR); BACKOV, Rénal, 33200 Bordeaux-Cauderan (FR)
(74) Mandataire: Corizzi, Valérie
(86) Numéro de dépôt international: PCT/FR2017/051262
(87) Numéro de publication internationale: WO 2017/203153

(56) Documents cités:
- WO-A1-2009/153324
- WO-A1-2012/168380
- US-A1- 2011 290 695
- US-B1- 6 749 678
- L. O. Oyekunle: "Certain Relationships between Chemical Composition and Properties of Petroleum Asphalts from Different Origin", Oil & Gas Science and Technology, Vol. 61, N° 3, 1 janvier 2006 (2006-01-01), pages 433-441, XP055044412, DOI: 10.2516/ogst:2006043a Extrait de l'Internet: URL:http://ogst.ifpenergiesnouvelles.fr/ar ticles/ogst/pdf/2006/03/oyekunle_vol61n3.p df [extrait le 2012-11-15]
- R. L. HUBBARD ET AL: "Determination of Asphaltenes, Oils, and Resins in Asphalt", ANALYTICAL CHEMISTRY, vol. 20, no. 5, 1 mai 1948 (1948-05-01), pages 460-465, XP055343014, US ISSN: 0003-2700, DOI: 10.1021/ac60017a015
- MOSCHOPEDIS S E ET AL: "Oxidation of a bitumen", FUEL, IPC SCIENCE AND TECHNOLOGY PRESS, GUILDFORD, GB, vol. 54, no. 3, 1 juillet 1975 (1975-07-01), pages 210-212, XP025455704, ISSN: 0016-2361, DOI: 10.1016/0016-2361(75)90014-9 [extrait le 1975-07-01]
- BABU D R ET AL: "Effect of low-temperature oxidation on the composition of Athabasca bitumen", FUEL, IPC SCIENCE AND TECHNOLOGY PRESS, GUILDFORD, GB, vol. 63, no. 6, 1 juin 1984 (1984-06-01), pages 858-861, XP025457664, ISSN: 0016-2361, DOI: 10.1016/0016-2361(84)90080-2 [extrait le 1984-06-01]
- NADER NCIRI ET AL: "Chemical Characterization of Gilsonite Bitumen", JOURNAL OF PETROLEUM & ENVIRONMENTAL BIOTECHNOLOGY, vol. 05, no. 05, 1 janvier 2014 (2014-01-01), pages 1-10, XP055343348, DOI: 10.4172/2157-7463.1000193
- Anonymous: "Product range (ALTEK bitumen)", , 1 September 2020 (2020-09-01), pages 1-5, XP055848189, Retrieved from the Internet: URL:https://totalenergies.ch/fr/system/fil es/atoms/files/altek_bitume_fr.pdf [retrieved on 2021-10-06]
- Anonymous: "OXIDIZED BITUMEN 150/5", , 1 January 2021 (2021-01-01), pages 1-1, XP055848214, Retrieved from the Internet: URL:https://oxidizedbitumen.com/wp-content /uploads/2021/09/BITUMEN-150-5.pdf [retrieved on 2021-10-06]

## Description

### Domaine technique

La présente invention a pour objet un bitume routier sous forme divisée, solide à température ambiante. La présente invention concerne également un procédé de préparation de bitume routier à température ambiante ainsi que son utilisation comme liant routier, notamment pour la fabrication d'enrobés.

La présente invention concerne également un procédé de fabrication d'enrobés à partir de bitume solide selon l'invention ainsi qu'un procédé de transport et/ou de stockage de bitume routier solide à température ambiante selon l'invention.

### Etat de l'art

La grande majorité du bitume est utilisée en construction, principalement pour la fabrication de chaussées routières ou dans l'industrie, par exemple pour des applications d'étanchéité comme par exemple pour la toiture. Il se présente généralement sous la forme d'un matériau noir fortement visqueux, voire solide à température ambiante, qui se fluidifie en chauffant.

De manière générale, le bitume est stocké et transporté à chaud, en vrac, dans des camions-citernes ou par bateaux à des températures élevées de l'ordre de 120°C à 200°C. Or, le stockage et le transport du bitume à chaud présente certains inconvénients. D'une part, le transport du bitume à chaud sous forme liquide est considéré comme dangereux et il est très encadré d'un point de vue règlementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du bitume pourra augmenter durant un trajet trop long. Les distances de livraison du bitume sont donc limitées. D'autre part, le maintien du bitume à des températures élevées dans les cuves ou dans les camions-citernes consomme de l'énergie. En outre, le maintien du bitume à des températures élevées pendant une longue période peut affecter les propriétés du bitume et ainsi changer les performances finales de l'enrobé.

Pour pallier les problèmes du transport et du stockage du bitume à chaud, des conditionnements permettant le transport et le stockage des bitumes à température ambiante ont été développés. Ce mode de transport du bitume sous conditionnement à température ambiante ne représente qu'une fraction minime des quantités transportées dans le monde, mais il correspond à des besoins bien réels pour les régions géographiques d'accès difficile et coûteux par les moyens de transport traditionnels.

A titre d'exemple de conditionnement permettant le transport à froid utilisé actuellement, on peut citer le conditionnement du bitume à température ambiante dans des fûts métalliques. Ce moyen est de plus en plus contestable d'un point de vue environnemental car le bitume stocké dans les fûts doit être réchauffé avant son utilisation comme liant routier. Or, cette opération est difficile à mettre en oeuvre pour ce type de conditionnement et les fûts constituent un déchet après utilisation. D'autre part, le stockage du bitume à température ambiante dans des fûts conduit à des pertes car le bitume est très visqueux et une partie du produit reste sur les parois du fût lors du transvasement dans les cuves des unités de production des enrobés. Quant à la manipulation et au transport de produits bitumineux dans ces fûts, ils peuvent s'avérer difficiles et dangereux si l'équipement spécialisé de manutention des fûts n'est pas disponible chez les transporteurs ou sur le lieu d'utilisation du bitume.

A titre d'autre exemple de conditionnement, on peut citer les bitumes sous forme de granules transportés et/ou stockés dans des sacs, souvent utilisés dans des endroits où la température ambiante est élevée. Ces granules présentent l'avantage d'être facilement manipulables. US 3 026 568 décrit des granules de bitume recouverts d'un matériau poudreux, tel que de la poudre de calcaire. Néanmoins, ce type de bitume en granules n'empêche pas le fluage du bitume, notamment à température ambiante élevée.

WO2009/153324 et WO 2012/168380 décrivent des granules de bitume composées d'un coeur en bitume recouvert d'une couche en bitume présentant une pénétration à 25°C inférieure à 5 dmm. Néanmoins, ce type de granules n'empêche pas le fluage du bitume constituant le coeur des granules lors du stockage et/ou du transport du bitume à température ambiante élevée car la coque réalisée en bitume présentant une pénétration à 25°C inférieure à 5 dmm n'est pas suffisamment résistante vis-à-vis des nombreux chocs lors du stockage et/ou du transport du bitume.

US 2011/0290695 décrit un système permettant de transporter du bitume sous la forme de pavés, lesdits pavés étant recouverts d'un film bitumineux comprenant du bitume naturel et de la gomme polymère synthétique.

Cependant, il ne décrit pas de bitume solide à température ambiante sous la forme de granules. Il ne décrit pas non plus de couche de revêtement en un matériau bitumineux enrichi en asphaltènes.

La Demanderesse a donc cherché à mettre au point des bitumes capables d'être soumis aux conditions de transport et/ou stockage et/ou manipulation à températures ambiantes élevées sans fluer, en particulier des bitumes sous forme de granules dont l'adhésion et l'agglomération lors de leur transport et/ou stockage et/ou manipulation à température ambiante élevée sont réduites par rapport aux granules de l'art antérieur.

Il existe donc un besoin de fournir un bitume routier transportable et/ou stockable et/ou manipulable à température ambiante, permettant de remédier aux inconvénients de l'art antérieur.

FR 3 024 454 décrit des granules de bitume comprenant au moins un additif chimique répondant à la problématique de transport et/ou stockage et/ou manipulation du bitume routier à températures ambiantes. Toutefois, le bitume mis en oeuvre dans FR 3 024 454 n'est pas un bitume reconstitué et par conséquent, l'utilisateur ne peut moduler ses propriétés en vue de les optimiser en fonction de son utilisation finale.

Un objectif de la présente invention est de fournir un bitume routier transportable et/ou stockable et/ou manipulable à température ambiante élevée, et dont les propriétés sont conservées au cours du temps.

En particulier, le but de la présente invention est de fournir un bitume routier transportable et/ou stockable pendant une durée supérieure à 2 mois, de préférence à 3 mois, et à température ambiante élevée, notamment à une température inférieure à 100°C, de préférence de 20°C à 80°C.

Un autre objectif de l'invention est de proposer un bitume routier facilement manipulable, notamment à température ambiante élevée, en particulier à une température allant jusqu'à 100°C, de préférence de 20°C à 80°C.

En particulier, le but de la présente invention est de fournir un bitume routier facilement manipulable après une durée de transport et/ou de stockage prolongée à température ambiante élevée, notamment pendant une durée de transport et/ou de stockage supérieure à 2 mois, de préférence supérieure à 3 mois, et à une température allant jusqu'à 100°C, de préférence entre 20°C et 80°C.

Un objectif de la présente invention est de fournir un bitume routier sous une forme qui permette son écoulement sous forme solide à température ambiante, de façon à pouvoir le manipuler sans perte de matière. On a cherché à fournir un bitume routier qui soit sous une forme permettant de le conditionner dans un emballage, de le déconditionner, de le transvaser dans un équipement, même à une température ambiante élevée, sans avoir besoin de le chauffer, et sans perte de matière. Le bitume proposé est sous forme divisée et solide à température ambiante de telle sorte qu'il permet de résoudre de façon satisfaisante les problèmes évoqués ci-dessus.

Un autre objectif de la présente invention est de fournir un bitume routier transportable et/ou stockable et/ou manipulable à température ambiante élevée, dont les propriétés sont conservées au cours du temps et dont la composition peut préalablement être modulée en fonction de son utilisation finale.

Un autre objectif est de proposer un procédé industriel et économique pour fabriquer du bitume routier transportable et/ou stockable à température ambiante.

Un autre objectif de l'invention est de proposer un procédé industriel et économique pour fabriquer des enrobés à partir de bitume routier transportable et/ou stockable à température ambiante.

Un autre objectif de l'invention est de proposer un procédé écologique et économique pour transporter et/ou stocker et/ou manipuler le bitume routier à température ambiante, permettant d'éviter l'utilisation de moyens supplémentaires pour le maintien en température dudit bitume lors du transport et/ou du stockage et/ou de la manipulation et permettant de minimiser la présence de déchets et/ou de résidus.

### Résumé de l'invention

L'invention concerne un bitume solide à température ambiante sous forme de granules comprenant un coeur en un premier matériau bitumineux et une couche de revêtement en un second matériau bitumineux, dans lequel le second matériau bitumineux comprend des asphaltènes en une teneur allant de 30% à 50% en poids par rapport au poids total de la couche de revêtement.

L'invention concerne également un procédé de fabrication d'un bitume solide tel que défini ci-dessus et ci-dessous, ce procédé comprenant :
i) la mise en forme du coeur à partir d'au moins un premier matériau bitumineux,
ii) la mise en forme de la couche de revêtement à partir du second matériau bitumineux sur tout ou partie de la surface du coeur.

L'invention concerne encore un bitume solide à température ambiante tel que défini ci-dessus et susceptible d'être obtenu par la mise en oeuvre du procédé de l'invention.

Selon un mode de réalisation préféré, le second matériau bitumineux présente une pénétrabilité à l'aiguille mesurée à 25°C selon la norme EN 1426 supérieure à 5 1/10 mm, de préférence allant de 6 à 50 1/10 mm, de préférence de 6 à 40 1/10 mm.

Selon un mode de réalisation préféré, le second matériau bitumineux est une base bitume additivée en asphaltènes insolubles dans les n-alcanes.

Selon un mode de réalisation encore préféré, la quantité d'asphaltènes insolubles dans les n-alcanes ajoutés à la base bitume pour former le second matériau bitumineux représente de 5% à 30% en poids, de préférence de 10% à 30% en poids par rapport au poids total du second matériau bitumineux.

Selon un mode de réalisation encore plus avantageux, les asphaltènes ajoutés à la base bitume sont insolubles dans le n-pentane.

Selon un mode de réalisation préféré, le premier matériau bitumineux présente une pénétrabilité à l'aiguille mesurée à 25°C selon la norme EN 1426 de 50 à 330 1/10 mm, de préférence de 50 à 220 1/10 mm.

Selon un mode de réalisation préféré, le premier matériau bitumineux est choisi parmi une fraction malténique, une base bitume, et leurs mélanges.

Selon un mode de réalisation préféré, le bitume solide à température ambiante de l'invention présente une stabilité au transport et au stockage à une température allant de 20 à 80°C pendant une durée supérieure ou égale à 2 mois, de préférence supérieure ou égale à 3 mois.

L'invention a encore pour objet l'utilisation de bitume solide tel que défini ci-dessus comme liant routier.

Avantageusement, le bitume solide est utilisé pour la fabrication d'enrobés.

L'invention concerne encore un procédé de fabrication d'enrobés comprenant au moins un liant routier et des granulats, le liant routier étant choisi parmi les bitumes solides tels que définis ci-dessus, ce procédé comprend au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

Selon un mode de réalisation préféré de ce procédé, celui-ci ne comporte pas d'étape de chauffage du liant routier avant son mélange avec les granulats.

L'invention concerne également un procédé de transport et/ou de stockage de bitume routier, ledit bitume routier étant transporté et/ou stocké sous forme de bitume solide à température ambiante tel que défini ci-dessus.

### Description détaillée

Les objectifs que la demanderesse s'est fixés ont été atteints grâce à la mise au point de compositions de bitume sous une forme divisée, présentant une structure coeur/enveloppe, dans laquelle le coeur est à base d'un premier matériau bitumineux et la couche de revêtement à base d'un second matériau bitumineux. Le choix des compositions de matériaux constituant le coeur et l'enveloppe confère à la structure globale des propriétés améliorées par rapport aux granules de bitumes connues de l'art antérieur.

Un premier objet de l'invention concerne un bitume solide à température ambiante sous forme de granules comprenant un coeur en un premier matériau bitumineux et une couche de revêtement en un second matériau bitumineux. Le second matériau bitumineux formant la couche de revêtement présente une teneur totale en asphaltènes comprise entre 30% et 50% en poids par rapport au poids total du bitume de la couche de revêtement. Cette teneur en asphaltènes est supérieure à celle présente dans une grande partie des bases bitumes. Ces asphaltènes sont avantageusement obtenus à partir d'une base bitume par extraction avec un n-alcane. Les asphaltènes forment le résidu d'extraction insoluble dans le n-alcane.

Par « n-alcane », on entend un alcane linéaire et saturé, comprenant de 3 à 10 atomes de carbone, de préférence de 3 à 8 atomes de carbone. On peut envisager de faire une extraction par étapes, avec un premier alcane pour une première extraction puis avec un second alcane pour une seconde extraction. Encore plus préférentiellement, le n-alcane est choisi parmi les alcanes en C5 à C7. Avantageusement, le n-alcane utilisé selon l'invention est le n-pentane.

Par « température ambiante », on entend la température résultante des conditions climatiques dans lesquelles est transporté et/ou stocké le bitume routier. Plus précisément, la température ambiante équivaut à la température atteinte lors du transport et/ou du stockage du bitume routier, étant entendu que la température ambiante implique qu'aucun apport de chaleur n'est apporté autre que celui résultant des conditions climatiques.

L'invention concerne des bitumes susceptibles d'être soumis à une température ambiante élevée, en particulier une température allant jusqu'à 100°C, de préférence de 20°C à 80°C.

Par « bitume solide à température ambiante », on entend un bitume présentant un aspect solide à température ambiante quelles que soient les conditions de transport et/ou de stockage. Plus précisément, on entend par bitume solide à température ambiante, un bitume qui conserve son aspect solide tout au long du transport et/ou du stockage à température ambiante, c'est-à-dire un bitume qui ne flue pas à température ambiante sous son propre poids et de plus, qui ne flue pas lorsqu'il est soumis à des forces de pressions issues des conditions de transport et/ou de stockage.

Par « coeur en matériau bitumineux », on entend un coeur qui est formé d'au moins un matériau bitumineux. De préférence, le matériau bitumineux est choisi parmi une fraction malténique, une base bitume, et leurs mélanges.

Par « couche de revêtement », on entend une couche homogène recouvrant tout en partie de la surface du coeur. Plus précisément, on entend que la couche de revêtement recouvre au moins 90% de la surface du coeur, de préférence au moins 95% de la surface du coeur, plus préférentiellement au moins 99% de la surface du coeur.

Par « couche de revêtement en bitume », on entend une couche de revêtement homogène qui est formée par une ou plusieurs bases bitumes et qui présente une teneur totale en asphaltènes comprise entre 30% et 50% en poids par rapport au poids total de la couche de revêtement. Certaines bases bitumes sont naturellement riches en asphaltènes, d'autres sont additivées pour atteindre une teneur en asphaltènes de 30 à 50 % en poids.

Par « asphaltènes extraits au n-alcane », on entend des fractions pétrolières, obtenues à partir d'une base bitume par extraction au moyen d'un n-alcane et qui sont insolubles dans le n-alcane. Avantageusement, les asphaltènes selon l'invention sont insolubles dans le n-pentane. Au sens de l'invention, les asphaltènes insolubles dans le n-pentane peuvent également être appelés « asphaltènes extraits au n-pentane ».

Les asphaltènes ont une fonction viscosifiante au sein du bitume. Dès lors, la modulation de leur concentration au sein d'un bitume permet de varier la viscosité du bitume de manière contrôlée.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

### Les bases bitume

Dans la présente invention, on utilise une base bitume, ou un produit dérivé d'une base bitume, tel qu'une fraction malténique, pour la préparation du premier matériau bitumineux. On utilise une base bitume pour la préparation du second matériau bitumineux. On peut utiliser une même base bitume ou des bases bitume différentes pour la formulation des deux matériaux bitumineux. Au sens de l'invention, les termes « bitume » et « bitume routier » sont utilisés, de manière équivalente et indépendamment l'un de l'autre. Par « bitume » ou « bitume routier », on entend toutes compositions bitumineuses constituées d'une ou de plusieurs bases bitumes, lesdites compositions étant destinées à une application routière.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélanges de bases bitumes provenant du raffinage du pétrole brut, en particulier des bases bitumes contenant des asphaltènes ou des brais. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage.

Selon l'invention, pour les procédés conventionnels de fabrication des bases bitumes, on opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Selon l'invention, les bitumes soufflés peuvent être fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide orthophosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

### Le coeur en matériau bitumineux

Selon l'invention, le noyau ou coeur des granules de bitume solide est composé d'au moins un premier matériau bitumineux.

De préférence, la partie bitumineuse est choisie parmi une fraction malténique, une base bitume, et leurs mélanges.

Par « fraction malténique», on entend une fraction pétrolière, initialement présente dans une base bitume, qui est soluble dans les n-alcanes. Avantageusement, la fraction malténique mise en oeuvre selon l'invention est soluble dans le n-pentane. Au sens de l'invention, la fraction malténique soluble dans le n-pentane peut également être appelée « maltènes extraits au n-pentane ».

Selon un mode de réalisation particulier, la fraction malténique est extraite au n-pentane à partir d'une base bitume.

De préférence, lorsque le premier matériau bitumineux est une fraction malténique, il comprend une teneur en maltènes supérieure ou égale à 60% en masse, de préférence supérieure ou égale à 70% en poids par rapport au poids total du premier matériau bitumineux.

Préférentiellement, le premier matériau bitumineux, mis en oeuvre pour fabriquer le coeur des granules de l'invention présente une pénétrabilité à l'aiguille mesurée à 25°C selon la norme EN 1426 de 20 à 330 1/10 mm, de préférence de 50 à 220 1/10 mm.

De manière bien connue, la mesure dite de « pénétrabilité à l'aiguille » est réalisée au moyen d'un test normalisé NF EN 1426 à 25°C (P₂₅). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g. La norme NF EN 1426 remplace la norme homologuée NF T 66-004 de décembre 1986 avec effet au 20 décembre 1999 (décision du Directeur Général d'AFNOR en date du 20 novembre 1999).

Selon un mode de réalisation particulier, le premier matériau bitumineux comprend au moins une base bitume.

Selon un autre mode de réalisation particulier, le premier matériau bitumineux comprend au moins une fraction malténique.

Selon un autre mode de réalisation particulier, le premier matériau bitumineux comprend au moins une fraction malténique et au moins une base bitume. Dans ce mode de réalisation, la teneur en fraction malténique représente avantageusement de 10% à 90% en poids, de préférence de 20% à 80% en poids par rapport au poids total du premier matériau bitumineux.

Selon cette variante, les maltènes peuvent avoir été obtenus à partir de la même base bitume que celle utilisée dans la formulation du premier matériau bitumineux. Ils peuvent aussi avoir été obtenus à partir d'une autre base bitume que celle utilisée dans la formulation du premier matériau bitumineux.

Selon un mode de réalisation de l'invention, le matériau bitumineux formant le coeur des granules selon l'invention peut également comprendre au moins un élastomère pour bitume connu tel que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. On peut également citer les élastomères réalisés à partir de monomères styrène et de monomères butadiène permettant une réticulation sans agent réticulant tels que décrits dans les documents WO2007/058994, WO2008/137394 et par la demanderesse dans la demande de brevet WO11/013073.

### La couche de revêtement en matériau bitumineux

Selon un mode de réalisation de l'invention, la couche de revêtement est en un second matériau bitumineux, qui présente une teneur totale en asphaltènes allant de 30% à 50% en poids par rapport au poids total du second matériau bitumineux. La couche de revêtement est solide à température ambiante, y compris à température ambiante élevée.

Selon un mode de réalisation de l'invention, le second matériau bitumineux formant la couche de revêtement présente une pénétrabilité à l'aiguille mesurée à 25°C selon la norme EN 1426 supérieure à 5 1/10 mm, de préférence allant de 6 à 50 1/10 mm, de préférence de 6 à 40 1/10 mm.

Selon un mode de réalisation de l'invention, le second matériau bitumineux formant la couche de revêtement est composé d'une base bitume additivée en asphaltènes. Avantageusement, ces asphaltènes ont été extraits au n-alcane, de préférence extraits au n-pentane.

De préférence, la teneur en asphaltènes extraits au n-alcane, préférentiellement au n-pentane, ajoutée à la base bitume représente de 5% à 30% en poids, de préférence de 10% à 30% en poids par rapport au poids total du second matériau bitumineux.

La base bitume elle-même comprend habituellement des asphaltènes, l'addition d'asphaltène en plus de ceux déjà présents dans la base bitume modifie les propriétés de pénétrabilité et de viscosité de la base bitume d'origine.

Par « bitume additivé en asphaltènes extraits au n-alcane », on entend une base bitume d'origine à laquelle une teneur supplémentaire en asphaltènes extraits au n-alcane est ajoutée.

Plus préférentiellement, par « bitume additivé en asphaltènes extraits au n-pentane », on entend une base bitume d'origine auquel une teneur supplémentaire en asphaltènes extraits au n-pentane est ajoutée.

Les asphaltènes peuvent avoir été obtenus à partir de la même base bitume que celle utilisée dans la formulation du second matériau bitumineux. Ils peuvent avoir été obtenus à partir d'une autre base bitume que celle utilisée dans la formulation du second matériau bitumineux.

Avantageusement, le second matériau bitumineux est obtenu par mise en contact d'une base bitume avec des asphaltènes extraits au n-alcane, de préférence au n-pentane, et chauffage à 200°C pendant une durée comprise entre 10 min et 2h, de préférence sous atmosphère inerte. La composition ainsi obtenue est homogénéisée pendant une durée comprise entre 5 minutes et 20 minutes, puis laissée au repos à température ambiante pendant une durée comprise entre 15 minutes et 45 minutes.

Par « base bitume d'origine », on entend une base bitume non additivée par des asphaltènes extraits au n-alcane, notamment au n-pentane.

Lorsqu'un bitume présente une teneur totale en asphaltènes inférieure à 30%, ledit bitume présente un aspect collant à température ambiante et par conséquent, ne permet pas d'obtenir du bitume solide sous forme de granules facilement manipulables lors d'un stockage et/ou d'un transport à température ambiante élevée car ces granules adhèrent entre-elles.

Lorsqu'un bitume présente une teneur totale en asphaltènes supérieure à 50%, ledit bitume ne forme pas une composition homogène du fait de sa trop grande teneur en asphaltènes. Par conséquent, le bitume présentant une teneur totale en asphaltènes supérieure à 50% ne peut être mis sous la forme d'une couche de revêtement.

Selon un mode de réalisation préféré, le second matériau bitumineux dont est composée la couche de revêtement est essentiellement constitué de bitume présentant une teneur totale en asphaltènes comprise entre 30% et 50% en poids par rapport au poids total du second matériau bitumineux.

### Les granules :

Selon l'invention, le bitume solide à température ambiante est conditionné sous une forme divisée, c'est-à-dire sous forme d'unités de petite taille, que l'on nomme granules ou particules, comportant un coeur à base d'un matériau bitumineux et une enveloppe ou coque ou enrobage ou couche de revêtement ou revêtement.

De préférence, les granules de bitume solide selon l'invention peuvent avoir au sein d'une même population de granules, une ou plusieurs formes choisies parmi une forme cylindrique, sphérique ou ovoïde. La taille des granules de bitume est telle que la dimension moyenne la plus longue est de préférence inférieure ou égale à 30 mm, plus préférentiellement de 5 à 30 mm, encore plus préférentiellement comprise de 5 à 20 mm. La taille et la forme des granules de bitume peuvent varier selon le procédé de fabrication employé. Par exemple, l'utilisation d'une filière permet de contrôler la fabrication de granules d'une taille choisie. Un tamisage permet de sélectionner des granules en fonction de leur taille.

De préférence, les granules de bitume selon l'invention présentent un poids compris entre 1 mg et 5 g, de préférence entre 10 mg et 4 g, plus préférentiellement entre 50 mg et 2 g.

Sans être liée à la théorie, la Demanderesse a découvert de manière inattendue que la teneur en asphaltènes extraits au n-alcane, de préférence au n-pentane, comprise entre 30% et 50% en poids par rapport au poids total du second matériau bitumineux selon l'invention permet d'obtenir une couche de revêtement :
- qui est résistante aux conditions climatiques et aux conditions de transport et/ou de stockage du bitume routier solide,
- qui se casse facilement sous un effet de cisaillement mécanique, comme par exemple sous l'effet d'un cisaillement mécanique appliqué dans une cuve telle qu'un malaxeur ou un tambour-malaxeur lors de la fabrication d'enrobés,
- qui se liquéfie facilement au contact des granulats chauds utilisés lors de la fabrication d'enrobés.

Plus particulièrement, la couche de revêtement résiste au transport et/ou au stockage du bitume à température ambiante dans des « Big Bags » tout en étant appropriée à la fabrication des enrobés. Elle permet la libération du coeur en matériau bitumineux lors de la fabrication d'enrobés sous l'effet d'un cisaillement mécanique et/ou en se liquéfiant au contact des granulats chauds.

Selon un mode de réalisation de l'invention particulièrement préféré, le bitume solide présente :
- un coeur en un premier matériau bitumineux et,
- une couche de revêtement en un second matériau bitumineux présentant une teneur totale en asphaltènes extraits au n-alcane, de préférence au n-pentane, allant de 30% à 50% en poids par rapport au poids total du second matériau bitumineux.

De manière encore préférée, le bitume solide présente :
- un coeur en un premier matériau bitumineux choisi parmi une fraction malténique, une base bitume, et leurs mélanges et,
- une couche de revêtement en un second matériau bitumineux comprenant une base bitume additivée en asphaltènes extraits au n-alcane, de préférence au n-pentane, et présentant une teneur totale en asphaltènes allant de 30% à 50% en poids par rapport au poids total du bitume de la couche de revêtement.

Selon un mode de réalisation encore plus avantageux, le bitume solide est essentiellement constitué de :
- un coeur constitué d'un premier matériau bitumineux et,
- une couche de revêtement constituée d'un second matériau bitumineux comprenant une base bitume et présentant une teneur totale en asphaltènes allant de 30% à 50% en poids par rapport au poids total du second matériau bitumineux.

### Procédé de fabrication des granules :

Un autre objet de l'invention concerne un procédé de fabrication d'un bitume solide à température ambiante sous forme de granules composé d'un coeur en un premier matériau bitumineux et d'une couche de revêtement du coeur en un second matériau bitumineux, ce procédé comprenant :
i) la mise en forme du coeur à partir du premier matériau bitumineux,
ii) la mise en forme de la couche de revêtement à partir du second matériau bitumineux sur tout ou partie de la surface du coeur.

De préférence, l'étape ii) de mise en forme se fait par trempage, pulvérisation, co-extrusion, etc.

La mise en forme du coeur des granules selon l'invention à partir d'au moins un matériau bitumineux peut être réalisée selon tout procédé connu, par exemple selon le procédé de fabrication décrit dans le document US 3 026 568, le document WO 2009/153324 ou le document WO 2012/168380. Selon un mode de réalisation particulier, la mise en forme du coeur du bitume solide peut être réalisée par égouttage, en particulier à l'aide d'un tambour.

D'autres techniques peuvent être utilisées dans le procédé de fabrication du coeur de bitume solide, en particulier le moulage, le pastillage, l'extrusion...

De préférence, les particules de coeur de bitume solide présentent une dimension moyenne la plus longue allant de 1 à 20 mm, avantageusement de 4 à 15 mm.

Un autre objet de l'invention est un bitume solide à température ambiante sous forme de granules susceptible d'être obtenu par la mise en oeuvre du procédé selon l'invention tel que décrit ci-dessus. Un tel bitume solide sous forme de granules présente avantageusement les propriétés décrites ci-dessus.

### Utilisation des granules de bitume solide :

Un autre objet de l'invention concerne également l'utilisation des granules de bitume solide à température ambiante selon l'invention comme liant routier.

Le liant routier peut être employé pour fabriquer des enrobés, en association avec des granulats selon tout procédé connu.

De préférence, le bitume solide à température ambiante selon l'invention est utilisé pour la fabrication d'enrobés.

Les enrobés bitumineux sont utilisés comme matériaux pour la construction et l'entretien des corps de chaussée et de leur revêtement, ainsi que pour la réalisation de tous travaux de voiries. On peut citer par exemple les enduits superficiels, les enrobés à chaud, les enrobés à froid, les enrobés coulés à froid, les graves émulsions, les couches de base, de liaison, d'accrochage et de roulement, et d'autres associations d'un liant bitumineux et du granulat routier possédant des propriétés particulières, telles que les couches anti-orniérantes, les enrobés drainants, ou les asphaltes (mélange entre un liant bitumineux et des granulats du type du sable).

Préférentiellement, un enrobé bitumineux comprend :
- de 3 à 10% en masse d'un liant bitumineux, et
- de 90 à 97% en masse de granulats,
les pourcentages étant exprimés par rapport à la masse totale de l'enrobé bitumineux.

Par « granulats », on entend au sens de l'invention des charges minérales telles que des fines, du sable ou des gravillons mais aussi des charges synthétiques.

Les charges minérales sont constituées de fines ou fillers (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm).

Les fines ou fillers, les sables et les gravillons sont des granulats répondant de préférence aux spécifications de la norme NF EN 13043. Un granulat peut être naturel, artificiel ou recyclé. Le granulat naturel est un granulat d'origine minérale n'ayant subi aucune transformation autre que mécanique. Le granulat artificiel est un granulat d'origine minérale résultant d'un procédé industriel comprenant des transformations thermiques ou autres. Les granulats sont généralement désignés en termes de dimensions inférieure (d) et supérieure (D) de 25 tamis, exprimées sous forme « d/D » correspondant à la classe granulaire. Cette désignation admet que des grains puissent être retenus sur le tamis supérieur (refus sur D) et que d'autres puissent passer au travers du tamis inférieur (passant à d). Les granulats sont des grains de dimensions comprises entre 0 et 125mm. Les fines comme les fillers sont une fraction granulaire d'un granulat qui passe au tamis de 0,063 mm. Le filler est un granulat dont la plupart des grains passe au tamis de 0,063 mm et qui peut être ajouté aux matériaux de construction pour leur conférer certaines propriétés. Les sables sont des granulats 0/2 selon la norme NF EN 13043 pour les mélanges bitumineux. Les gravillons sont des granulats pour lesquels d >2 mm et D <45 mm selon la norme NF EN 13043 pour les mélanges bitumineux et enduits.

Selon l'invention, les fines sont de toute nature minérale. Elles sont de préférence choisies parmi les fillers de type calcaire. La granulométrie des fines selon l'invention est de préférence inférieure à 63µm.

Selon l'invention, les sables sont de préférence choisis parmi les sables semi concassés ou roulés. La granulométrie des sables selon l'invention est de préférence comprise entre 63µm et 2mm.

Selon l'invention, les gravillons sont choisis parmi les gravillons de toute nature géologique de densité supérieure à 1,5. De préférence, la granulométrie des gravillons selon l'invention est comprise entre 2mm et 14mm. Les gravillons sont de préférence choisis parmi les granulométries 2/6, 4/6, 6/10, et 10/14.

Un autre objet de l'invention concerne un procédé de fabrication d'enrobés comprenant au moins un liant routier et des granulats, le liant routier étant le bitume solide selon l'invention, ce procédé comprenant au moins les étapes de :
- chauffage des granulats à une température allant de 100°C à180°C, de préférence de 120°C à 160°C,
- mélange des granulats avec le liant routier dans une cuve telle qu'un malaxeur ou un tambour malaxeur,
- obtention d'enrobés.

Le procédé de l'invention présente l'avantage de pouvoir être mis en oeuvre sans étape préalable de chauffage des granules de bitume solide.

Le procédé de fabrication d'enrobés selon l'invention ne requiert pas d'étape de chauffage des granules de bitume solide avant mélange avec les granulats car au contact des granulats chauds, le bitume solide à température ambiante fond.

Le bitume solide à température ambiante selon l'invention tel que décrit ci-dessus présente l'avantage de pouvoir être ajouté directement aux granulats chauds, sans avoir à être fondu préalablement au mélange avec les granulats chauds.

De préférence, l'étape de mélange des granulats et du liant routier est réalisée sous agitation, puis l'agitation est maintenue pendant au plus 5 minutes, de préférence au plus 1 minute pour permettre l'obtention d'un mélange homogène.

Le bitume solide sous forme de granules selon la présente invention est remarquable en ce qu'il permet le transport et/ou le stockage de bitume routier à température ambiante dans des conditions optimales, en particulier sans qu'il y ait agglomération et/ou adhésion du bitume solide lors de son transport et/ou son stockage, même lorsque la température ambiante est élevée. Par ailleurs, la couche de revêtement des granules casse sous l'effet du contact avec les granulats chauds et du cisaillement et il libère la base bitume. Enfin, la présence de la couche de revêtement dans le mélange de liant routier et de granulats permet de moduler les propriétés dudit bitume routier en fonction de l'application routière, comparativement à une base bitume non enrobée.

### Procédé de transport et/ou de stockage et/ou de manipulation de bitume routier

Un autre objet de l'invention concerne également un procédé de transport et/ou de stockage et/ou de manipulation de bitume routier, ledit bitume routier étant transporté et/ou stocké et/ou manipulé sous forme de granules de bitume solides à température ambiante.

De préférence, le bitume routier est transporté et/ou stocké à une température ambiante élevée pendant une durée supérieure ou égale à 2 mois, préférence à 3 mois.

De préférence, la température ambiante élevée est de 20°C à 90°C, de préférence de 20°C à 80°C, plus préférentiellement de 40°C à 80°C, encore plus préférentiellement de 40°C à 60°C.

Les granules de bitume selon l'invention présentent l'avantage de conserver leur forme divisée, et donc de pouvoir être manipulés, après un stockage et/ou un transport à une température ambiante élevée. Elles présentent en particulier la capacité de s'écouler sous leur propre poids sans fluer, ce qui permet leur stockage dans un conditionnement en sacs, en fûts ou en containers de toutes formes et de tous volumes puis leur transvasement depuis ce conditionnement vers un équipement, comme un équipement de chantier (cuve, mélangeur etc...).

Les granules de bitume sont, de préférence, transportés et/ou du stockés en vrac dans des sacs de 1 kg à 100 kg ou de 500 kg à 1000 kg couramment appelés dans le domaine des bitumes routiers des « Big Bag », lesdits sacs étant de préférence en matériau thermofusible. Ils peuvent également être transportés et/ou du stockés en vrac dans des cartons de 5 kg à 30 kg ou dans des fûts de 100 kg à 200 kg.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### Exemples

### Matériel et méthodes

Les caractéristiques rhéologiques et mécaniques des bitumes auxquelles on fait référence dans ces exemples sont mesurées de la façon indiquée dans le tableau 1.

**Tableau 1**

| **Propriété** | **Abréviation** | **Unité** | **Norme de mesure** |
|---|---|---|---|
| Pénétrabilité à l'aiguille à 25°C | P25 | 1/10 mm | NF EN 1426 |
| Température de ramollissement bille et anneau | TBA | °C | NF EN 1427 |

La variation de la température de ramollissement bille et anneau (TBA) de ladite composition est mesurée selon la norme NF EN 1427 entre l'échantillon extrait de la partie haute du tube d'échantillon et l'échantillon extrait de la partie basse du tube d'échantillon.

Les bases bitumes **B₂** et **B₃** sont préparées à partir :
- d'une base bitume de grade 35/50, notée **B₁**, ayant une pénétrabilité P₂₅ de 43 1/10 mm et une TBA de 51°C et disponible commercialement auprès du groupe TOTAL sous la marque AZALT^{®} ;
- d'asphaltènes extraits au n-pentane ;
- de maltènes extraits au n-pentane.

### Protocole d'extraction des aphaltènes et des maltènes extraits au n-pentane

10 g de la base bitume **B₁** sont déposés dans un bécher et 400 mL de n-pentane sont ajoutés dans ce bécher. L'ensemble est placé sous agitation pendant 12h puis ce mélange est filtré par filtration Buchner avec des filtres de 3 µm.

On obtient 2,5 g de résidu de filtration composé d'asphaltènes et nommé « asphaltènes extraits au n-pentane ». Le filtrat est ensuite évaporé sous vide et on obtient 7,5 g de résidu d'évaporation composé de maltènes et nommé « maltènes extraits au n-pentane ».

Les quantités en pourcentage massique utilisées pour chaque bitume sont indiquées dans le tableau 2 ci-dessous.

**Tableau 2**

| **Bitume** | **B₂** | **B₃** |
|---|---|---|
| Base bitume **B₁** | 80% | - |
| Asphaltènes extraits au n-pentane | 20% | - |
| Maltènes extraits au n-pentane | - | 100 % |
| P25 (1/10 mm) | 6-40 | 220-330 |

Les bitumes sont préparés de la manière suivante.

Pour le bitume **B₂**, 1,25 g d'asphaltènes extraits au n-pentane sont ajoutés à température ambiante dans 5 g de base bitume **B₁**. L'ensemble est ensuite chauffé à 200 °C sous flux d'argon pendant 30 min. Le mélange ainsi obtenu est homogénéisé à la spatule pendant 5 min puis laissé de nouveau sans agitation pendant 25 min supplémentaires.

Le matériau bitumineux **B₃** correspond à 2 g de maltènes extraits au n-pentane.

### 1. Préparation des granules de bitume solides G₁, G₂ et G₃

### 1.1 Méthode générale pour la préparation des granules de bitume selon l'invention

La base bitume **B₂** est réchauffée à 160°C pendant deux heures à l'étuve avant d'être coulée dans un moule en silicone présentant différents trous de forme sphérique. La base bitume **B₂**, préalablement chauffée, est coulée dans les moules puis des empreintes sont appliquées directement sur les moules remplis de bitume de façon à obtenir des couches de revêtement de bitume sous la forme de demie-sphère creuse. Après avoir constaté la solidification du bitume dans le moule, le surplus est arasé avec une lame chauffée au bec bunsen. Après 30 minutes, la couche de revêtement formée est démoulée. On laisse ensuite refroidir la couche de revêtement en bitume à température ambiante pendant 10 à 15 minutes.

Chacune des couches de revêtement de bitume solide sous la forme de demie-sphère creuse est ensuite remplie à température ambiante avec le matériau bitumineux **B₃**. Les demies-sphères ainsi remplies sont ensuite scellées deux par deux au moyen d'une spatule préalablement chauffée de façon à obtenir un bitume solide à température ambiante sous forme de granules selon l'invention comprenant un coeur en bitume et une couche de revêtement en bitume.

Trois granules de bitume solide **G₁**, **G₂** et **G₃** selon l'invention ont été préparées selon la méthode générale 1.1 décrite ci-dessus. Les compositions de ces granules sont décrites dans le Tableau 3 :

**Tableau 3**

| | **G₁** | **G₂** | **G₃** |
|---|---|---|---|
| Masse de la couche de revêtement | 2,36 g | 2,19 g | 2,43 g |
| Masse du coeur | 2,24 g | 1,88 g | 1,46 g |

Les granules de bitume solide **G₁**, **G₂** et **G₃** selon l'invention présentent une taille comprise entre 10 mm et 30 mm.

### 2. Essai de résistance à température ambiante des bitumes solides G₁, G₂, et G₃ selon l'invention

Cet essai est mis en oeuvre afin d'évaluer la résistance à température ambiante des granules **G₁** à **G₃** à une température de 40°C. En effet, cet essai permet de simuler les conditions de température des granules auxquelles elles sont soumises lors du transport et/ou du stockage en vrac dans des sacs de 10 à 100 kg ou dans des Big Bag de 500 à 1000 kg ou dans des fûts de 200 kg et d'évaluer leur résistance dans ces conditions.

L'essai de résistance à température ambiante à 40°C est réalisé en mettant les granules selon l'invention dans un récipient métallique placé à l'intérieur d'une enceinte thermique réglée à une température de 40°C pendant 15 jours. Les observations sont répertoriées dans le tableau 4 ci-dessous.

**Tableau 4**

| **Granules** | **G₁** | **G₂** | **G₃** |
|---|---|---|---|
| Tenue à température ambiante à 40°C | +++ | +++ | +++ |

| | | | |
|---|---|---|---|
| +++ : les granules conservent leur forme initiale et n'adhèrent pas entre elles. ++ : les granules n'adhérent pas entre elles mais ne présentent plus leur forme arrondie. + : les granules adhèrent légèrement entre elles. - : les granules sont assez fondues. -- : les granules sont fondues. | | | |

Les granules **G₁**, **G₂** et **G₃** selon l'invention présentent une très bonne résistance à une température ambiante de 40°C dans la mesure où elles n'adhèrent pas entre elles et conservent leur forme initiale. Ainsi, la manipulation et le transport/stockage desdites granules **G₁**, **G₂** et **G₃** seront aisés dans la mesure où les granules ne fondent pas et ne s'agglomèrent pas entre elles à température ambiante élevée.

## Revendications

1. Bitume solide à température ambiante sous forme de granules comprenant un coeur en un premier matériau bitumineux et une couche de revêtement en un second matériau bitumineux, dans lequel le second matériau bitumineux comprend des asphaltènes en une teneur allant de 30% à 50% en poids par rapport au poids total de la couche de revêtement.

2. Bitume selon la revendication 1, dans lequel le second matériau bitumineux présente une pénétrabilité à l'aiguille mesurée à 25°C selon la norme EN 1426 supérieure à 5 1/10 mm, de préférence allant de 6 à 50 1/10 mm, de préférence de 6 à 40 1/10 mm.

3. Bitume selon la revendication 1 ou 2, dans lequel le second matériau bitumineux est une base bitume additivée en asphaltènes insolubles dans les n-alcanes.

4. Bitume selon la revendication 3, dans lequel la quantité d'asphaltènes insolubles dans les n-alcanes ajoutés à la base bitume pour former le second matériau bitumineux représente de 5% à 30% en poids, de préférence de 10% à 30% en poids par rapport au poids total du second matériau bitumineux.

5. Bitume selon la revendication 3 ou la revendication 4, dans lequel les asphaltènes ajoutés à la base bitume sont insolubles dans le n-pentane.

6. Bitume selon l'une quelconque des revendications précédentes, dans lequel le premier matériau bitumineux présente une pénétrabilité à l'aiguille mesurée à 25°C selon la norme EN 1426 de 50 à 330 1/10 mm, de préférence de 50 à 220 1/10 mm.

7. Bitume selon l'une quelconque des revendications précédentes, dans lequel le premier matériau bitumineux est choisi parmi une fraction malténique, une base bitume, et leurs mélanges.

8. Procédé de fabrication d'un bitume solide selon l'une quelconque des revendications 1 à 7, ce procédé comprenant :
i) la mise en forme du coeur à partir d'au moins un premier matériau bitumineux,
ii) la mise en forme de la couche de revêtement à partir du second matériau bitumineux sur tout ou partie de la surface du coeur.

9. Bitume solide à température ambiante selon l'une quelconque des revendications 1 à 7 susceptible d'être obtenu par la mise en oeuvre du procédé selon la revendication 8.

10. Bitume solide à température ambiante selon l'une quelconque des revendications 1 à 7 et 9, qui présente une stabilité au transport et au stockage à une température allant de 20 à 80°C pendant une durée supérieure ou égale à 2 mois, de préférence supérieure ou égale à 3 mois.

11. Utilisation de bitume solide selon l'une quelconque des revendications 1 à 7, 9 et 10 comme liant routier.

12. Utilisation selon la revendication 11 pour la fabrication d'enrobés.

13. Procédé de fabrication d'enrobés comprenant au moins un liant routier et des granulats, le liant routier étant choisi parmi les bitumes solides selon l'une quelconque des revendications 1 à 7, 9 et 10, ce procédé comprend au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

14. Procédé selon la revendication 13, qui ne comporte pas d'étape de chauffage du liant routier avant son mélange avec les granulats.

15. Procédé de transport et/ou de stockage de bitume routier, ledit bitume routier étant transporté et/ou stocké sous forme de bitume solide à température ambiante selon l'une quelconque des revendications 1 à 7, 9 et 10.

## Patentansprüche

1. Bei Umgebungstemperatur festes Bitumen in Form von Granulat, umfassend einen Kern aus einem ersten bituminösen Material und eine Überzugsschicht aus einem zweiten bituminösen Material, bei dem das zweite bituminöse Material Asphaltene mit einem Gehalt zwischen 30 Gew.-% und 50 Gew.-% bezogen auf das Gesamtgewicht der Überzugsschicht umfasst.

2. Bitumen nach Anspruch 1, bei dem das zweite bituminöse Material eine bei 25 °C nach der Norm EN 1426 gemessene Nadelpenetration von mehr als 5 1/10 mm, bevorzugt zwischen 6 und 50 1/10 mm, bevorzugt zwischen 6 und 40 1/10 mm, aufweist.

3. Bitumen nach Anspruch 1 oder 2, bei dem das zweite bituminöse Material eine Bitumenbasis ist, die mit in n-Alkanen unlöslichen Asphaltenen additiviert ist.

4. Bitumen nach Anspruch 3, bei dem die Menge der in n-Alkanen unlöslichen Asphaltene, die der Bitumenbasis zugegeben wird, um das zweite bituminöse Material zu bilden, 5 Gew.-% bis 30 Gew.-%, bevorzugt 10 Gew.-% bis 30 Gew.-%, bezogen auf das Gesamtgewicht des zweiten bituminösen Materials ausmacht.

5. Bitumen nach Anspruch 3 oder Anspruch 4, bei dem die der Bitumenbasis zugegebenen Asphaltene in n-Pentan unlöslich sind.

6. Bitumen nach einem der vorhergehenden Ansprüche, bei dem das bei erste bituminöse Material eine bei 25 °C nach der Norm EN 1426 gemessene Nadelpenetration von 50 bis 330 1/10 mm, bevorzugt von 50 bis 220 1/10 mm, aufweist.

7. Bitumen nach einem der vorhergehenden Ansprüche, bei dem das erste bituminöse Material unter einer Maltenfraktion, einer Bitumenbasis und ihren Mischungen gewählt ist.

8. Verfahren zur Herstellung eines festen Bitumens nach einem der Ansprüche 1 bis 7, wobei dieses Verfahren umfasst:
i) das Formen des Kerns aus mindestens einem ersten bituminösen Material,
ii) das Formen der Überzugsschicht aus dem zweiten bituminösen Material auf der gesamten oder einem Teil der Oberfläche des Kerns.

9. Bei Umgebungstemperatur festes Bitumen nach einem der Ansprüche 1 bis 7, das durch die Umsetzung des Verfahrens nach Anspruch 8 erhalten werden kann.

10. Bei Umgebungstemperatur festes Bitumen nach einem der Ansprüche 1 bis 7 und 9, das eine Transport- und Lagerstabilität bei einer Temperatur zwischen 20 und 80 °C während einer Dauer von 2 Monaten oder mehr, bevorzugt von 3 Monaten oder mehr, aufweist.

11. Verwendung von festem Bitumen nach einem der Ansprüche 1 bis 7, 9 und 10 als Straßenbaubindemittel.

12. Verwendung nach Anspruch 11 zur Herstellung von Asphalten.

13. Verfahren zur Herstellung von Asphalten, umfassend mindestens ein Straßenbaubindemittel und Zuschlagstoffe, wobei das Straßenbaubindemittel unter den festen Bitumen nach einem der Ansprüche 1 bis 7, 9 und 10 gewählt ist, wobei dieses Verfahren mindestens die folgenden Schritte umfasst:
- Erhitzen der Zuschlagstoffe auf eine Temperatur zwischen 100 °C und 180 °C, bevorzugt zwischen 120 °C und 160 °C,
- Mischen der Zuschlagstoffe mit dem Straßenbaubindemittel in einem Trog wie einem Mischer oder einer Mischtrommel,
- Erhalten von Asphalten.

14. Verfahren nach Anspruch 13, das keinen Schritt des Erhitzens des Straßenbaubindemittels vor seinem Mischen mit den Zuschlagstoffen beinhaltet.

15. Verfahren zum Transportieren und/oder Lagern von Straßenbaubitumen, wobei das Straßenbaubitumen in Form von bei Umgebungstemperatur festem Bitumen nach einem der Ansprüche 1 bis 7, 9 und 10 transportiert und/oder gelagert wird.

## Claims

1. A bitumen that is solid at ambient temperature in the form of pellets comprising a core made of a first bituminous material and a coating layer made of a second bituminous material, in which the second bituminous material comprises asphaltenes in a content ranging from 30% to 50% by weight relative to the total weight of the coating layer.

2. The bitumen as claimed in claim 1, in which the second bituminous material has a needle penetrability measured at 25°C according to the standard EN 1426 of greater than 5 1/10 mm, preferably ranging from 6 to 50 1/10 mm, preferably from 6 to 40 1/10 mm.

3. The bitumen as claimed in claim 1 or 2, in which the second bituminous material is a bitumen base supplemented with asphaltenes that are insoluble in n-alkanes.

4. The bitumen as claimed in claim 3, in which the amount of asphaltenes that are insoluble in n-alkanes added to the bitumen base to form the second bituminous material represents from 5% to 30% by weight and preferably from 10% to 30% by weight relative to the total weight of the second bituminous material.

5. The bitumen as claimed in claim 3 or claim 4, in which the asphaltenes added to the bitumen base are insoluble in n-pentane.

6. The bitumen as claimed in any one of the preceding claims, in which the first bituminous material has a needle penetrability measured at 25°C according to the standard EN 1426 of from 50 to 330 1/10 mm, preferably from 50 to 220 1/10 mm.

7. The bitumen as claimed in any one of the preceding claims, in which the first bituminous material is chosen from a maltenic fraction, a bitumen base, and mixtures thereof.

8. A process for manufacturing a solid bitumen as claimed in any one of claims 1 to 7, this process comprising:
i) the forming of the core from at least one first bituminous material,
ii) the forming of the coating layer from the second bituminous material on all or part of the surface of the core.

9. The bitumen that is solid at ambient temperature as claimed in any one of claims 1 to 7, which may be obtained by performing the process as claimed in claim 8.

10. The bitumen that is solid at ambient temperature as claimed in any one of claims 1 to 7 and 9, which shows stability on transportation and storage at a temperature ranging from 20 to 80°C for a period of more than or equal to two months, preferably more than or equal to three months.

11. The use of the solid bitumen as claimed in any one of claims 1 to 7, 9 and 10, as a road binder.

12. The use as claimed in claim 11, for manufacturing bituminous mixes.

13. A process for manufacturing bituminous mixes comprising at least one road binder and granulates, the road binder being chosen from the solid bitumens as claimed in any one of claims 1 to 7, 9 and 10, this process comprising at least the steps of:
- heating the granulates to a temperature ranging from 100°C to 180°C, preferably from 120°C to 160°C,
- mixing the granulates with the road binder in a tank such as a mixer or a mixing drum,
- obtaining bituminous mixes.

14. The process as claimed in claim 13, which does not include a step of heating the road binder before it is mixed with the granulates.

15. A process for transporting and/or storing road bitumen, said road bitumen being transported and/or stored in the form of bitumen that is solid at ambient temperature as claimed in any one of claims 1 to 7, 9 and 10.
